# EUROPEAN PATENT SPECIFICATION

(11) **EP 3 819 215 B1**
(45) Date of publication and mention of the grant of the patent: **10.04.2024**
(21) Application number: 20205486.2
(22) Date of filing: 03.11.2020
(51) Int. Cl.: B64C 39/02, B64U 10/13, B64U 30/20, B64U 50/13, B64U 50/19, B64U 70/00, B64U 80/70

(54) **A STATION FOR STORING, CONTROLLING AND COMMANDING A DRONE DESIGNED TO PERFORM OBSERVATION MISSIONS ON THE TERRITORY TRAVELLED BY STRETCHES OF RAILWAY LINES AND ALSO ON THE LINES THEMSELVES, AS WELL AS ON ALL THE STRUCTURES WHICH OPERATE ALONG THE LINE**
STATION ZUM AUFNEHMEN, STEUERN UND BEFEHLIGEN EINER DROHNE, DIE DAFÜR AUSGELEGT IST, BEOBACHTUNGSMISSIONEN AUF VON BAHNSTRECKEN DURCHZOGENEN GEBIETEN UND AUF DEN BAHNSTRECKEN SELBST SOWIE AUF ALL DEN STRUKTUREN ENTLANG DER STRECKE DURCHZUFÜHREN
STATION POUR STOCKER, COMMANDER ET AMENER UN DRONE À EXÉCUTER DES MISSIONS D'OBSERVATION SUR LE TERRITOIRE PARCOURU PAR DES TRONÇONS DE LIGNES DE CHEMIN DE FER ET ÉGALEMENT SUR LES LIGNES ELLES-MÊMES, AINSI QUE SUR TOUTES LES STRUCTURES PRÉSENTES LE LONG DE LIGNE

(30) Priority: 05.11.2019 IT 201900020384
(43) Date of publication of application: 12.05.2021
(73) Proprietor: RFI S.p.A., 00161 Roma RM (IT)
(72) Inventor: FIUMARA, Franco, 00199 ROMA (IT); DE MURO, Stefano, 00144 ROMA (IT); TESEI, Marco, 62020 GUALDO (IT); FEDELI, Eugenio, 00139 ROMA (IT); FALASCHI, Giacomo, 50060 LOCALITA' CONTEA - RUFINA (IT); MECOCCI, Alessandro, 50144 FIRENZE (IT); VIGNOLI, Valerio, 50137 FIRENZE (IT)
(74) Representative: Bianciardi, Ezio

(56) References cited:
- EP-A2- 2 974 958
- WO-A1-2016/059555
- WO-A1-2019/093967
- CN-A- 108 502 201
- DE-U1-202018 005 389
- IT-A1-201700 076 573
- RU-C1- 2 678 381
- US-A1- 2019 023 416

## Description

This invention relates to a station for storing (as well as controlling and commanding) a drone and it finds particular use in the context of missions for surveillance of territories and infrastructures, in particular for the observation on territories travelled by stretches of railway lines and also on the lines themselves, as well as on all the structures which operate along these railway lines.

There are currently prior art stations, as IT201700076573A1, EP2974958A2, CN108502201A and WO2019/093967A1, for storing, control and command of a drone which are configured in such a way as to control the steps of landing and take-off, cooling and recharging the drone, as well as to house the drone inside in a storage situation.

The landing and take-off steps normally occur on movable surfaces which are able to move the drone towards the inside or towards the outside of the station.

With regard to the recharging step, there are different systems which are able to recharge the drone once the latter is inside the station.

A first recharging system consists of an inductive type system wherein the drone, once it has landed, is positioned in such a way as to rest on the recharging device.

A second recharging system comprises, on the other hand, the action of an operator who manually replaces the battery.

The drones configured for use with the above-mentioned storage, command and control stations usually have, in the case of an inductive system, a recharging plate positioned in their lower portion, or, in the case of a manual system, a removable battery fitted in their upper portion.

Disadvantageously, these stations have some drawbacks, especially in terms of efficiency and costs.

Just the movable flat plates do not guarantee the correct positioning of the drone necessary for the subsequent recharging step, the drone very often lands in a position which does not coincide with the correct position to perform the recharging. For example, in the case of an induction system, the drone does not necessarily land exactly above the recharging point (or plate).

Another drawback is due to the recharging system itself; in particular the recharging system of the inductive type is a very expensive, complex and rather delicate system and therefore unsuitable for remote areas.

This system also has the drawback of not being very efficient since part of the charge is dispersed in the surrounding environment, making the charging process particularly slow and wasteful.

The recharging system which involves the intervention of an operator is also absolutely un-optimised in terms of timing since the process for manual replacement of the battery is slow. Also in the case of this recharging system, it is not possible to use in remote and un-manned areas since there is the need for the presence of an operator to change the battery.

A further drawback is due to the fact that, since there is the need for manual intervention, the recharging system is not suitable for drones used for monitoring and/or surveillance of very large zones such as, for example, railway stretches; since these zones are very extensive there is the need for continuous and repeated recharging of the drone and therefore the need for constant manual intervention.

The technical purpose of the invention is therefore to provide a station for storing, controlling and commanding a drone which is able to overcome the drawbacks of the prior art.

The aim of this invention is to provide a station for storing, controlling and commanding a drone which allows the operating efficiency to be increased in the context of an automated system.

In particular, the aim of the invention is to provide a storing, controlling and commanding station which is able to facilitate and speed up the recharging procedure.

A further aim of the invention is to provide a storing, controlling and commanding station having a level of automation of the recharging such as to render efficient the monitoring and/or surveillance of large areas (such as those covered by railway lines) which require a large use of the battery of the drone and therefore numerous and repeated recharges. The technical purpose indicated and the aims specified are substantially achieved by a station for storing, controlling and commanding a drone comprising the technical features described in one or more of the accompanying claims.

The dependent claims correspond to possible embodiments of the invention.

In particular, the storing, controlling and commanding station is suitable for a drone of the type having a recharging coupler located at the top.

The invention also relates to a drone, particularly structured for use with a storing, controlling and commanding station according to the invention, as well as an automatic detection device comprising the above-mentioned drone in combination with the storing, controlling and commanding station. The invention also relates to a method for inspecting a territory travelled by the railway sections and the railway lines, as well as the structures which operate along the lines.

The storing, controlling and commanding station comprises at least one module designed for the landing/taking off and recharging of the drone. In particular, the module comprises a containment frame, forming inside a storage space in which to position the drone in a storage configuration, and a landing/taking off surface mounted on the containment frame and movable in sliding fashion between at least an extracted configuration and a retracted configuration.

In particular, in the extracted configuration the landing/taking off surface is positioned at least partly outside the storage space in such a way as to allow the landing and/or take-off of the drone. On the other hand, in the retracted configuration the landing/taking off surface is positioned inside the storage space in such a way as to position the drone entirely inside it. The storing, controlling and commanding station also comprises a shaped guide, mounted on the containment frame and positioned in the storage space above the landing/taking off surface; in this way the shaped guide forms an engaging portion in sliding contact with the above-mentioned recharging coupler at the top of the drone.

The shaped guide also defines at least one sliding surface directed and/or converging towards a recharging zone.

The station also comprises a recharging system which is positioned in the recharging zone and comprises at least an electrical connector and pushing means movable along the sliding direction of the landing/taking off surface configured for pushing the drone. In this way, the recharging coupler of the drone slides along the shaped guide reaching the at least one connector in the recharging zone.

Further features and advantages of the invention are more apparent in the non-limiting description which follows of a non-exclusive embodiment of a station for storing, controlling and commanding a drone, a drone and an automatic detection device.

The description is set out below with reference to the accompanying drawings which are provided solely for purposes of illustration without restricting the scope of the invention and in which:
- Figure 1 shows a storing, controlling and commanding station;
- Figures 2A and 2B show a module of a storing, controlling and commanding station in two different configurations;
- Figure 3 shows the inside of a module of a storing, controlling and commanding station;
- Figures 4A and 4B show a cross section of a module of a storing, controlling and commanding station in two different configurations;
- Figures 5A and 5B show a detail of the inside of a module of a storing, controlling and commanding station;
- Figure 6 is a cross-section of a module of a storing, controlling and commanding station;
- Figure 7 shows a detail of the inside of a module of a storing, controlling and commanding station;
- Figure 8 shows an embodiment of the storing station of Figure 1 further equipped with a weather station.

With reference to the above-mentioned drawings, the numeral "S" denotes in its entirety a storing, controlling and commanding station (hereinafter referred to as station "S" for simplicity) of a drone "D" according to the invention.

The station "S" comprises at least one module 100 configured for the landing/taking off and recharging of a drone "D".

Mainly, the module 100 comprises a containment frame 101 which forms a storage space "V". The containment frame 101 has a box-shaped structure having the shape of a parallelepiped, preferably lying mainly horizontally. Preferably, the containment frame 101 has a first side with dimensions of between 1200 and 1600 mm, a second side of between 1200 and 1600 mm and the third side of between 400 and 600 mm. For example, according to a preferred, non-limiting embodiment, the containment frame 101 has dimensions of 1430x1446x510 mm.

The frame 101 is made preferably using section bars made of metal material, even more preferably aluminium with an overall weight of 25 kg; in this way, the movement of the module 100 by operators is not onerous.

In such a way as to isolate the landing/taking off module 100 from the outside environment, the containment frame 101 is covered by cover panels 102 made preferably of polymeric material such as, for example, Forex. The cover panels 102 are fixed to the containment frame 101 by fastening screws (not illustrated).

Preferably, the cover panels 102 are further covered by insulating panels 103 made preferably of polymeric material such as, for example, XPS. The insulating panels 103 are fixed to the cover panels 102 preferably by means of an insulating foam, such as, for example, polyurethane foam. This avoids possible problems deriving from the interaction with the outside environment, such as, for example, infiltrations of water and moisture.

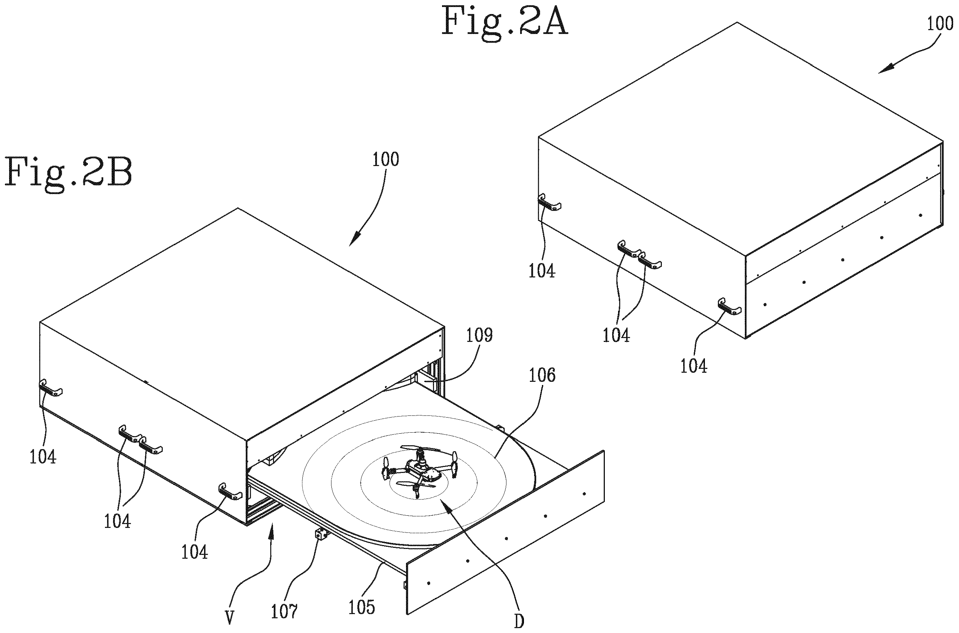

In order to further facilitate the movement of the module 100, on its outer lateral surfaces there may be a plurality of handles 104 designed for transporting the module 100 by hand. According to the embodiment shown in Figure 2A, there are four handles 104 on a first lateral surface and four handles 104 on a second lateral surface, opposite the first in such a way that the movement of the module 100 can be performed by four or eight operators.

In other words, the at least one module 100 has a substantially box-shaped shape formed starting from a frame 101 covered with cover panels 102 and with insulating panels 103.

A landing/taking off surface 105 is mounted inside the containment frame 101 where the drone "D" is rested before take-off and after landing.

The landing/taking off surface 105 is preferably made of polymeric material, still more preferably it is made of the same material as the cover panels 102.

The landing/taking off surface 105 has on its upper surface a pattern 106 identifying a landing area with shapes and colours such as to be easily recognisable by the drone "D" during landing and take-off; the accompanying drawings show, for example, a concentric hoop pattern 106.

Preferably, the landing/taking off surface 105 is fixed resting on a reinforcing structure 107 in turn applied to the containment frame 101. The reinforcing structure 107 is formed mainly from section bars preferably made of metal, for example aluminium profiles, in such a way as to prevent bending of the landing/taking off surface 105.

The landing/taking off surface 105 is configured for being movable in a sliding fashion between at least one extracted configuration, shown in Figure 2B, wherein the landing/taking off surface 105 is positioned at least partly outside the storage space "V" in such a way as to allow the landing and/or take-off of the drone "D", and a retracted configuration, shown in Figure 2A, wherein the landing/taking off surface 105 is positioned inside the storage space "V" in such a way that the drone "D" is positioned entirely inside the storage space "V".

The sliding of the landing/taking off surface 105 between the above-mentioned configurations occurs thanks to an electric motor 108, for example connected to an actuator or transmission with recirculating ball screw. This embodiment allows the use of a lower power due to the low friction.

The landing/taking off surface 105 slides, thanks to the electric motor 108, along sliding guides 109 between the extracted configuration and the retracted configuration in such a way as to move the drone "D" towards the inside or towards the outside of the module 100.

In particular, the motion is transmitted by two pulleys connected by a toothed belt (not illustrated) which is able to move the landing/taking off surface 105 along the sliding guides 109 mounted on the module 100, preferably fixed to the containment frame 101. These sliding guides 109 allow a stroke substantially equal to their length, preferably equal to 1400 mm.

For adjusting the end of stroke position of the movement of the landing/taking off surface 105, during the passage from the extracted configuration to the retracted configuration, an apparatus comprising a microswitch 110 is introduced.

The microswitch 110 is actuated by a contact element 111 mounted on the landing/taking off surface 105. The contact element 111 comprises inclined portions designed to come into contact with the microswitch 110.

During the sliding of the landing/taking off surface 105, the inclined portions activate the microswitch 110 determining the end of stroke of the landing/taking off surface 105, which is thus in the retracted configuration. According to another embodiment, not illustrated in the accompanying drawings, there may be a further microswitch 110 configured to enter into operation if the first microswitch 110 does not operate.

In the station "S", and in particular in the module 100 described above, there is also a recharging system 112 by means of which the drone "D" is recharged.

The recharging system 112 comprises at least one electrical connector 113 in turn comprising mainly two electrical contacts 114 connected or connectable to different poles of an electricity supply source.

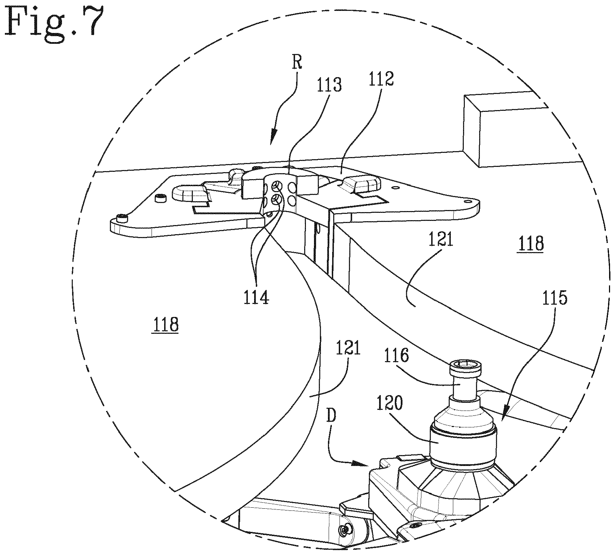

The two electrical contacts 114 are positioned consecutively along a direction perpendicular to the sliding direction of the landing/taking off surface 105, and in particular vertical, in such a way as to be configured for recharging the battery of the drone 'D'. As shown in Figure 7, each of the two electrical contacts 114 may be defined by a succession of contact points electrically connected to each other and positioned along a concave surface, preferably having the shape of an arc of a circle and facing towards a direction from which the drone "D" comes. Preferably, the electrical contacts 114 are carried by a load-bearing body defining said concave surface and made of dielectric material.

According to a preferred embodiment, the interfacing between the electrical connector 113 and the drone "D" occurs thanks to the presence of an upper expansion bay 115 applied to an upper portion of the drone "D".

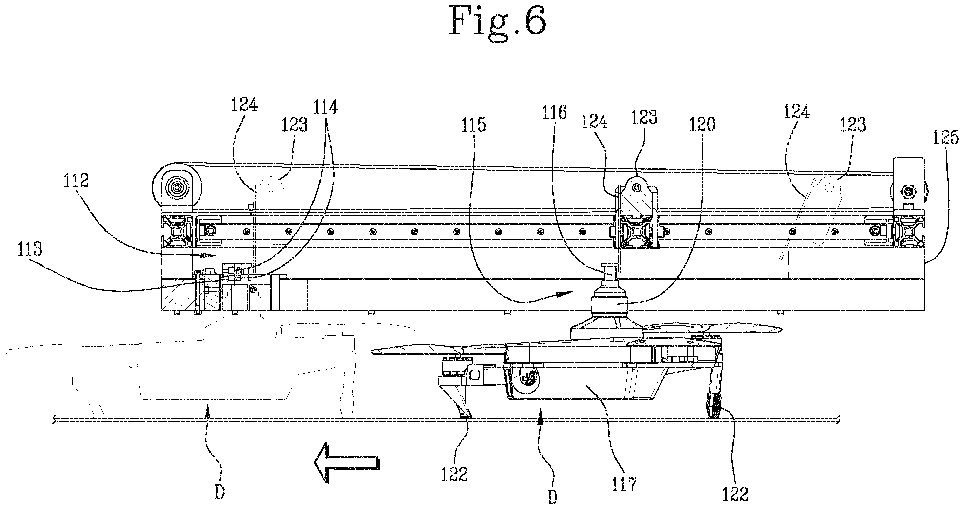

As shown in Figure 6, the expansion bay 115 has a substantially cone shape wherein the base, fixed to the main body of the drone 117, comprises all the devices and electrical cables which allow the recharging of the battery of the drone 'D', whilst the upper part comprises a recharging coupler 116 configured for at least the electrical connection, preferably also mechanical (shape coupling) with the electrical connector 113. According to an embodiment, the recharging coupler 116 of the drone "D" has two copper rings superposed, and insulated from each other, which act as a positive pole and a negative pole.

The recharging of the drone "D" occurs thanks to the contact between the rings and the electrical contacts 114 of the electrical connector 113.

In other words, the contact between the positive pole and the negative pole of the recharging coupler 116, positioned at the apex of the upper expansion bay 115, with the electrical contacts 114 of the connector 113 allow an easy recharging of the drone "D".

The upper expansion bay 115 of the drone "D" may be made integrally with the main body 117 of the drone "D", however, if using existing drones, the upper expansion bay 115 may be applied in retrofits to the main body 117 of the drone "D", for example by reversible fixing, welding, gluing or other, in such a way as to guarantee the correct positioning of the drone "D" in the station "S" and the correct recharging of the drone.

The drone "D" configured for use with the station "S" comprises a main body 117, a plurality of lifting propellers, a plurality of feet 122, one at least one detection device such as, for example, a video camera (not illustrated), and the upper expansion bay 115 which, to perform its function and as described below, extends above the top surface identified by the propellers.

Advantageously, as the expansion bay 115 can also be applied to an existing drone "D", it makes it possible to use the station "S", according to the invention, with any type of drone "D".

According to an embodiment, the upper expansion bay 115 may be made by using a 3D printer in such a way as to adhere correctly to the upper surface of the main body 117 of the drone "D".

For this reason, thanks to the upper expansion bay 115, the drone "D" is recharged by the contact between the recharging coupler 116 and the electrical connector 113 of the station "S". In particular, the electrical connector 113 is positioned in a recharging zone "R" such that the electrical connector 113 interfaces with the recharging coupler 116 of the drone "D" when the latter is in a storage configuration. In this configuration, the drone "D" is positioned completely inside the storage space "V" and in particular the drone "D" is positioned resting on the landing/taking off surface 105 which is in the retracted configuration.

The storage configuration of the drone "D" is reached by a fully automated movement of the latter.

The drone "D", in effect, after landing on the landing/taking off surface 105 is automatically directed towards a recharging zone "R" (defined by the above-mentioned electrical connector 113) so as to create the above-mentioned contact between the electrical connector 113 and the recharging coupler 116 and in this way allow the recharging of the drone "D".

Advantageously, the complete automation of the movement towards the recharging station makes the station "S" suitable for use on particularly large regions, such as, for example, those passed through by railway lines, where there is the need to recharge the drone "D" more and more times to monitor and cover the entire area.

In other words, when the drone "D" lands on the landing/taking off surface 105, the latter passes from the extracted configuration to the retracted configuration; in this way, the drone "D" is moved towards the electrical connector 113.

The complete movement of the drone "D" towards the recharging zone "R", and therefore towards the electrical connector 113, occurs in a fully automated fashion and also uses a shaped guide 118 and pushing means 119 configured to push the drone "D" in such a way as to obtain, in particular irrespective of the position reached by the drone "D" on the landing/taking off surface 105, the coupling between the electrical connector 113 and the recharging coupler 116.

The shaped guide 118 is mounted on the containment frame 101 and is positioned inside the storage space "V". In particular, the shaped guide 118 is positioned above the landing/taking off surface 105 to define an engaging portion in sliding contact with the upper expansion bay 115 of the drone "D".

In particular, the upper expansion bay 115 comprises an engaging portion 120, preferably between the base and the recharging coupler 116, which is able to slide in contact with the shaped guide 118.

The engaging portion 120 preferably has an axially symmetric shape covered with or made of a low friction material, for example Teflon, which is able to favour sliding.

Thanks to the presence of the low friction material, the engaging portion 120 is able to slide along the shaped guide 118 without encountering problems deriving from friction.

In other words, the drone "D" is moved towards the recharging zone "R" by the sliding of the engaging portion 120 of the upper expansion bay 115 along the shaped guide 120.

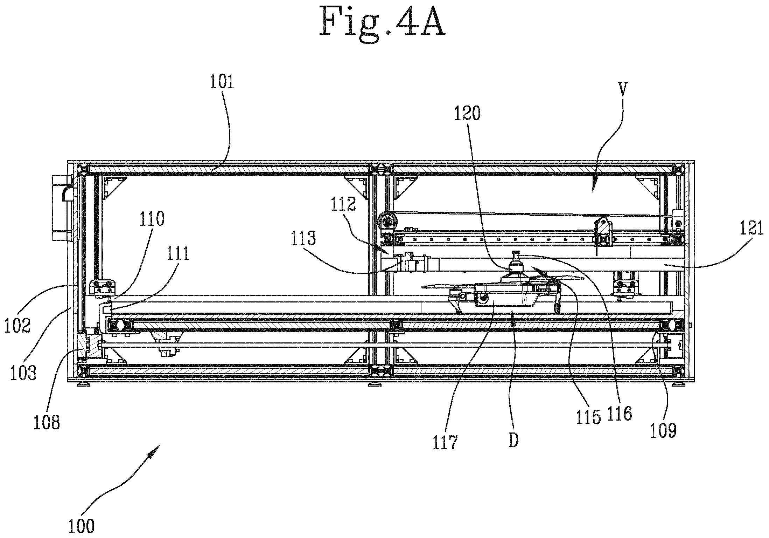

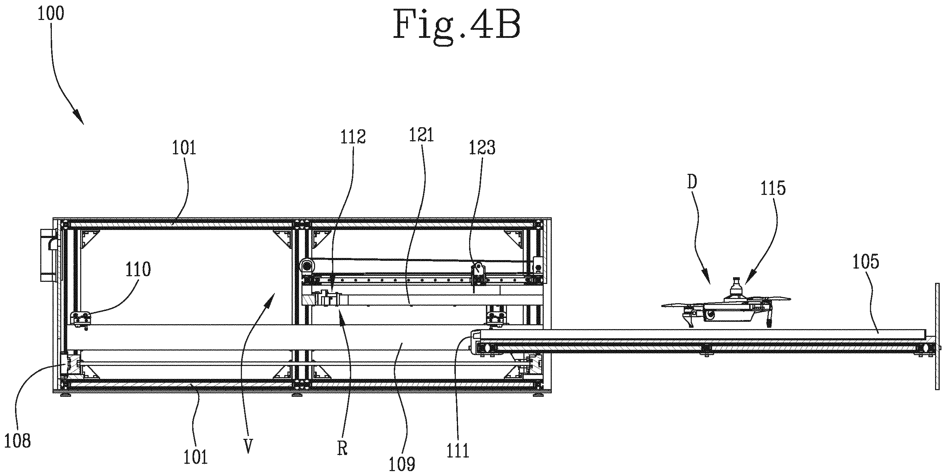

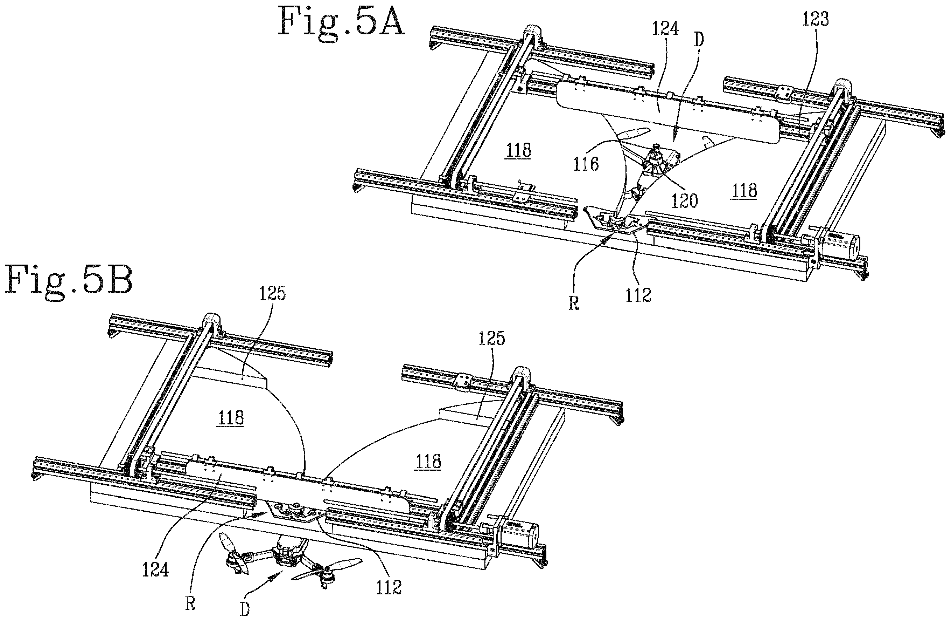

According to a preferred embodiment and as shown in Figures 4A, 4B, 5A, 5B and 7, the shaped guide 118 defines at least one sliding surface 121 such as to be convergent towards the recharging zone "R" and such as to enter into contact with the engaging portion 120 of the upper expansion bay 115 of the drone "D".

In particular, the shaped guide 118 has two sliding surfaces 121 facing each other and converging towards the recharging zone "R". Still more specifically, the sliding surfaces 121 are curved, preferably convex to define a cusp in which the recharging zone "R", and therefore the recharging system 112 with the electrical connector 113, is positioned. Preferably, the sliding surfaces 121 are shaped in the form of a circular arc.

In other words, the shaped guide 118 has a substantially funnel shape which is able to engage in a sliding fashion the engaging portion 120 of the upper expansion bay 115 of the drone "D"; in this way the portion 120, and consequently the drone "D", are moved towards the recharging zone "R", more specifically towards the electrical connector 113 in such a way that it makes contact with the recharging coupler 116 for recharging the drone "D".

According to other embodiments not shown in the drawings, on the other hand, the shaped guide 118 forms at least one sliding surface 121 such as to be directed towards the recharging zone "R". According to these embodiments, the sliding surface 121 may have a single sliding surface and/or a rectilinear shape.

A first function of the shaped guide 118 is therefore to direct the drone "D" towards a centre line of the landing/taking off surface 105 parallel to the sliding direction of the latter in such a way as to push the drone "D" towards the recharging zone "R". Normally, in fact, the drones "D" land at a point of the landing/taking off surface 105 which does not coincide exactly with the centre of the surface 105; this means that the drone "D" lands on a point not belonging to the centre line of the surface 105. In this case, the drone "D" is not positioned correctly to perform the recharging.

It is therefore thanks to the combined action of the sliding of the landing/taking off surface 105 and of the shaped guide 118 that the drone "D" is moved to be correctly directed towards the recharging zone "R". During the movement of the landing/taking off surface 105 from the extracted configuration to the retracted configuration, the engaging portion 120 of the upper expansion bay 115 of the drone "D" may enter into contact with the sliding surface 121 of the shaped guide 118. In particular, the engaging portion 120, as it is supported in a sliding fashion with the sliding surface 121 of the shaped guide 118, causes a movement of the drone "D" resulting from the retraction of the landing/taking off surface 105.

Advantageously, in order to guarantee in any case the final positioning of the drone "D" in the recharging zone obtaining the correct electrical contact between the electrical connector 113 and the recharging coupler 116, the movement of the drone "D" may be assisted by the pushing means 119.

The pushing means 119 are movable along the sliding direction of the landing/taking off surface 105 and are configured for pushing the drone "D" in such a way that the engaging portion 120 of the drone "D" slides along the shaped guide 118 reaching the recharging zone "R" in such a way that the recharging coupler 116 makes contact with the electrical connector 113.

In other words, the pushing means 119 enter into contact with a portion of the upper expansion bay 115 of the drone "D", preferably the upper end, to cause a further sliding of the engaging portion 120 along a sliding surface 121 of the shaped guide 118 such as to push the drone "D" to reach the recharging zone "R".

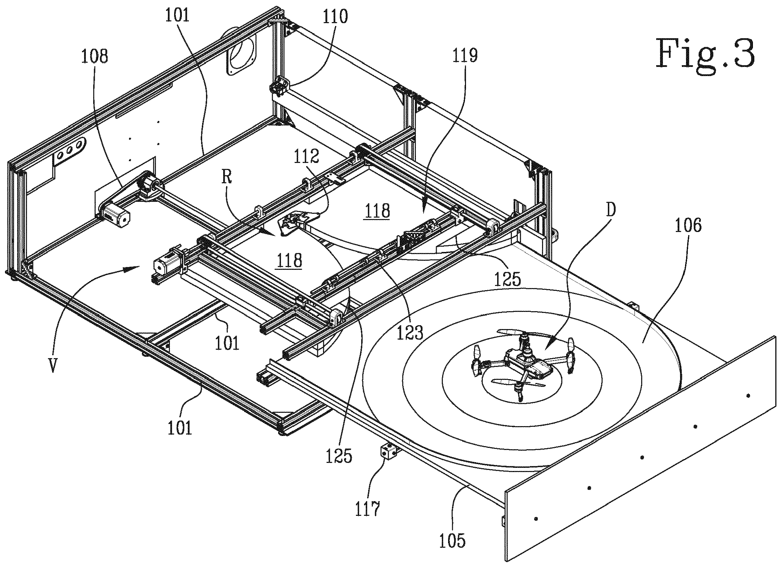

As shown in Figure 3, the pushing means 119 comprise a carriage 123 movable along the sliding direction of the landing/taking off surface 105 and a pushing unit 124 mounted on the carriage 123 and configured to adopt an operating position and a disengaged position.

The operating position is adopted by the pushing unit 124 at least during the withdrawal of the carriage 123 towards the recharging zone "R"; in this operating position the pushing unit 124 has the function of intercepting and pushing the drone "D" towards the recharging zone "R".

On the other hand, in the disengaged position, the pushing unit 124 is positioned in a position such as not to intercept any portion of the drone "D", in particular raised.

In other words, when the landing/taking off surface 105 is in the retracted configuration and the drone "D" has still not reached the recharging zone "R", the pushing unit 124 passes from the disengaged position to the operating position in such a way as to intercept the upper portion of the upper expansion bay 115 of the drone "D" for pushing it to the recharging zone "R".

In particular, the pushing unit 124 is rotatably mounted on the carriage 123 to rotate about a horizontal tilting axis between the operating and disengaged positions. In other words, the pushing unit 124 passes from the operating position to the disengaged position and vice versa by rotation about a horizontal tilting axis defined, for example, by a pin.

Preferably, the rotation of the pushing unit 124, from the disengaged position to the operating position, is performed by the force of gravity during the sliding of the carriage 123 towards the recharging zone "R".

On the other hand, the rotation of the pushing unit 124 from the operating position to the disengaged position is performed by interference with a fixed contact element 125 during a sliding of the carriage 123 away from the recharging zone "R".

Figure 6 shows how the pushing unit 124 is positioned during the various steps of the movement of the drone "D", in particular the disengaged position and the operating position are shown.

As described above, in the disengaged position (illustrated by thin lines in the right-hand part of Figure 6) the pushing unit 124 is in a position such as not to intercept any part of the drone "D", in particular the pushing unit 124 is in a raised and inclined position given by the fixed contact elements 125.

On the other hand, in the operating position, the pushing unit 124 is positioned in such a way as to be perpendicular to the landing/taking off surface 105; in this position the pushing unit 124 comes into contact with the upper expansion bay 115 of the drone "D" (as shown in the central part of Figure 6).

Once the pushing unit 124 has entered into contact with the upper expansion bay 115 of the drone "D", the latter is moved, in the direction of the arrow in Figure 6, from the pushing unit 124 to the recharging zone "R" (as illustrated by thin lines on the left of Figure 6).

According to a preferred but not exclusive embodiment, the pushing unit 124 is positioned at a level higher than the shaped guide 118 in such a way as to intercept a top portion of the drone protruding above the recharging coupler 116.

According to an embodiment, illustrated in the accompanying drawings, the pushing unit 124 is made in the form of a flat bar or blade.

According to alternative embodiments not illustrated, the rotation of the pushing unit 124 may be achieved by means of an actuation unit, for example an electric motor.

Advantageously, moreover, the pushing unit 124 is also configured for keeping the recharging coupler 116 pushed against the electrical connector 113, guaranteeing a permanent electrical contact during recharging. For this purpose, preferably, the electrical contacts 114 can be configured in a resilient fashion or associated with respective contrast springs in such a way as to absorb any misalignments between the recharging coupler 116 and the electrical connector 113.

During the thrust of the drone "D" exerted by the pushing unit 124, the drone "D" can vary the relative orientation about a vertical axis, that is to say, it can rotate on the landing/taking off surface 105, whilst following a trajectory defined by the interaction between the engaging portion 120 and the shaped guides 118. However, the electrical connection between the electrical connector 113 and the recharging coupler 116 is guaranteed by the axial symmetry at least of the recharging coupler 116 formed by the above-mentioned copper rings.

To favour this rotation and prevent any jamming or overturning of the drone "D", the feet 122 supporting the drone "D" are made and/or coated with a low friction material, preferably Teflon.

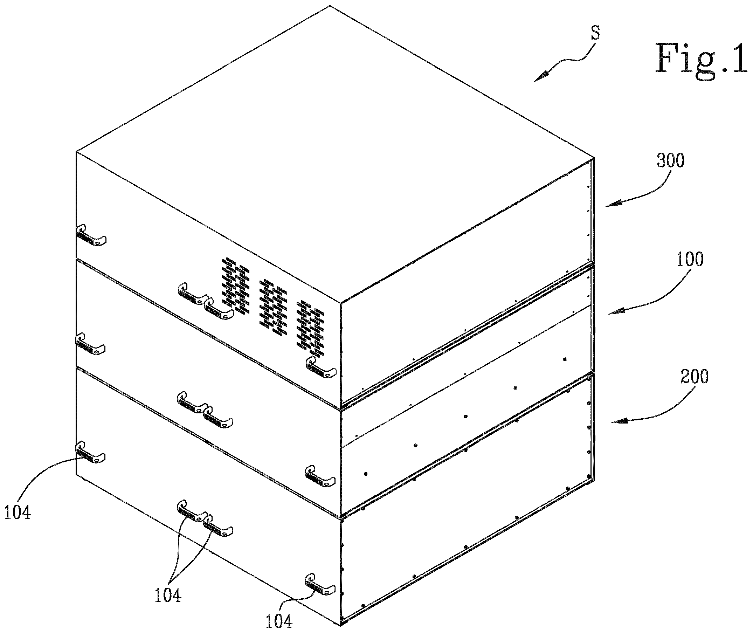

In accordance with a further aspect of the invention and as shown in Figure 1, the station "S" may also comprise a hardware and power supply module 200.

The module 200 is connected or connectable to the landing/taking off module 100 and is configured for housing hardware components suitable for the operation of the landing/taking off module 100 and/or suitable for the electricity supply of the landing/taking off module 100.

In other words, the hardware module 200 is mainly configured to manage and control the station "S". Some examples of functions performed by the hardware module 200 are:
- Analysing the data coming from on-board sensors (of the station) for monitoring the status of the station "S" and any faults;
- Managing the information and data in such a way as to guarantee an efficient and redundant communication with an external infrastructure;
- Guaranteeing the possibility of remotely setting up reconnaissance missions;
- Guaranteeing the transmission of the video flows and images towards a remote command and control centre;
- Guaranteeing logging of the data detected.

In accordance with another aspect of the invention and as shown in Figure 1, the station "S" may also comprise a conditioning module 300.

The module is connected or connectable to the landing/taking off module 100 and is configured for generating hot and/or cold air for controlling the temperature of the landing/taking off module and/or of the drone "D" stored in it.

An aim of the conditioning module 300 is mainly that of cooling the battery of the drone "D". Another aim of the conditioning module 300 is to cool the electronic components used to make the station "S".

In particular, according to a preferred embodiment, the conditioning module 300 has two compartments separated by a wall preferably made of insulating material, even more preferably XPS.

The first compartment comprises an internal unit, designed for sucking the air from the outside environment by means of slots on the walls of the conditioning module, conditioning it and introducing it into the adjacent modules preferably using a set of pipes and fans.

The second compartment comprises an external unit designed to discharge the hot air produced by the station "S". The hot air is fed into the second compartment through a set of pipes and fans connected to the adjacent modules and is disposed of externally by means of a plurality of slots present on the walls of the conditioning module.

Both the units, inside and outside, are housed inside the module making it compact with the consequent advantage of facilitating transport and use. Since both the internal and external units are inserted inside the same module 300, the movement and installation of the module 300 are facilitated.

Preferably, both the modules 200 and 300 described above have an outer shape with dimensions identical to the dimensions of the outer shape of the landing/taking off module 100.

Both the conditioning modules 300 and hardware 200 preferably comprise a plurality of handles 104, mounted on the respective outer surfaces, to facilitate transport by operators.

Advantageously, the three modules 100, 200, 300 can therefore be stacked to obtain a compact station "S" which is easy to move.

According to the embodiment shown in Figure 1, the landing/taking off module 100 is between the conditioning module 300, positioned at the apex of the stack, and the hardware and power supply module 200, positioned at the base of the stack.

Advantageously, the modular structure of the station "S" facilitates its transport and on-site installation.

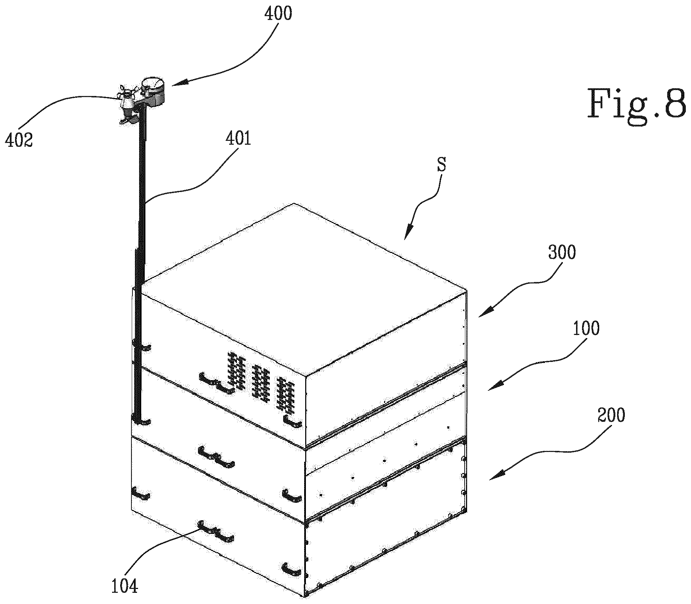

According to a further embodiment shown in Figure 8, the station "S" may also comprise a weather station 400. The weather station 400 can be installed on a profile 401, preferably made of aluminium, which is connected to the side of the conditioning module 300, in such a way as to allow the weather station 400 to reach a desired height, in particular of approximately three metres.

The function of the weather station 400 is to provide information on instantaneous weather conditions, acquired by suitable sensors 402, such as, for example, anemometer, thermometer and rain gauge.

Thanks to a connection to a dedicated server, the information collected by the sensors 402 is processed to provide weather forecasts useful for authorising or not the flight of the drone "D".

In other words, the weather station 400 acquires and processes meteorological/climatic information in such a way that it is possible to assess the suitability or otherwise of the latter to authorise a mission of the drone "D". In this way, the drone "D" is operating safely.

The information is also acquired and processed during the mission of the drone "D" in such a way as to return the drone "D" following changes to the weather conditions which could adversely affect the optimum monitoring conditions by the drone "D" or also the condition of the drone. Advantageously, during transport of the station "S" it is possible to remove the module 400 and place it in a suitable space left in the module 200 so as to make the movement more practical.

A further advantage is the low weight of the individual modules 100, 200, 300 which can be transported manually by the operators.

Lastly, an automatic measuring device according to the invention is described, comprising:
- a station "S" of the type described above;
- a drone "D" having the recharging coupler 116 in such a way as to interact with the station "S", in particular in such a way as to engage with the shaped guide 118 to be moved towards the recharging electrical connector 113;
- a control unit connected to the station "S" and to the drone "D" for guiding the latter in an automated fashion.

The control unit controls and commands both the drone "D" to actuate surveillance and landing/taking off operations relative to the station "S", and the station "S" in such a way that the latter moves automatically to be configured in such a way as to allow the landing or take-off of the drone "D".

Moreover, the control unit also receives and controls the information obtained from the weather station 400 for activating a command for returning the drone "D" from a flight mission and/or to inhibit the exit of the drone in the case of adverse weather conditions.

Lastly, a method is described below for inspecting a territory travelled by the railway sections and the railway lines, as well as the structures which operate along these lines, which comprises the use of the station "S" and the drone "D".

The method comprises the steps of:
- preparing a station (S) and a drone (D) as described above;
- guiding the drone (D) automatically in accordance with surveillance and landing and take-off operations relative to the station (S), and for actuating the station (S) to automatically perform operations for landing and take-off of the drone (D) relative to the station (S);
- electrically recharging the drone (D) during at least a storage step of the drone (D) inside the landing/taking off module (100) of the station (S). The invention achieves the above-mentioned aims, eliminating the drawbacks highlighted in the prior art.

In fact, the station "S" as described and claimed allows a high level of automation both in terms of positioning of the drone "D" relative to the recharging system and in terms of recharging process. This not only allows the station "S" to be positioned in very remote or not easily accessible areas, for example inaccessible areas or tunnels, but also to use the drone "D" for monitoring/inspection very large areas, such as those covered by railway lines, since the level of automation of the station "S" eliminates the drawbacks deriving from the repeated recharging needed by the drone "D" to be able to cover the above-mentioned areas. A further advantage is due to the fact that the station "S" allows a fast and efficient recharging of the drone "D".

A further advantage derives from the reduced weight and the small dimensions of the modules (100, 200, 300) which facilitate their movement and their installation.

## Claims

1. A station (S) for storing, controlling and commanding a drone (D) designed to perform observation missions on the territory travelled by stretches of railway lines and also on the lines themselves, as well as on all the structures which operate along the line, said drone (D) being of the type having an upper expansion bay (115) equipped with a recharging coupler (116), said station (S) comprising at least one module (100) designed for the landing/taking off and recharging of said drone (D) wherein said first module (100) comprises:
- a containment frame (101) forming inside a storage space (V) in which to position said drone (D) in a storage configuration;
- a landing/taking off surface (105) mounted on the containment frame (101) and movable in a sliding fashion between at least an extracted configuration, wherein said landing/taking off surface (105) is positioned at least partly outside said storage space (V) in such a way as to allow the landing and/or the taking off of said drone (D), and a retracted configuration, wherein said landing/taking off surface (105) is positioned inside said storage space (V) in such a way as to position said drone (D) entirely in the storage space (V);
wherein said first module (100) comprises:
- a shaped guide (118), mounted on the containment frame (101), positioned in the storage space (V) and above said landing/taking off surface (105) for forming an engaging portion suitable for sliding contact with said upper expansion bay (115) of the drone (D), said shaped guide (118) defining at least one sliding surface (121) directed and/or converging towards a recharging zone;
- a recharging system (112) positioned in said recharging zone and comprising at least one electrical connector (113) positioned on said shaped guide (118);
- pushing means (119), movable along the sliding direction of the landing/taking off surface (105) and configured for pushing the drone (D) in such a way that the recharging coupler (116) of the drone (D) slides along said shaped guide (118) reaching said at least one connector (113) in the recharging zone.

2. The station (S) according to claim 1, wherein said shaped guide (118) has two sliding surfaces (121) facing each other and converging towards said recharging zone.

3. The station (S) according to claim 2, wherein said sliding surfaces (121) are curved, preferably convex to define a cusp in which said recharging zone is positioned and still more preferably having the shape of a circular arc.

4. The station (S) according to any one of the preceding claims, wherein said shaped guide (118) is mounted stationarily to the containment frame (101).

5. The station (S) according to any one of the preceding claims, wherein said pushing means (119) comprise a carriage (123) movable along the sliding direction of the landing/taking off surface (105) and a pushing unit (124) mounted on the movable carriage (123) and configured to adopt an operating position, wherein during the feeding of the movable carriage (123) towards the retracted position the pushing unit intercepts and pushes a portion of said drone (D); and a disengaged position wherein the pushing unit (124) is positioned in such a way as to not intercept any portion of said drone (D).

6. The station (S) according to claim 5, wherein the pushing unit (124) is rotatably mounted on the carriage (123) to rotate about a horizontal tilting axis between said operating and disengaged positions; preferably, the rotation of the pushing unit (124) about the tilting axis from the disengaged position to the operating position being actuated by gravity during a sliding of the carriage (123) towards the recharging zone and the rotation of the pushing unit (124) from the operating position to the disengaged position being actuated by interference with a fixed contact (125) during a sliding of the carriage (123) away from the recharging zone.

7. The station (S) according to claim 5 or 6, wherein said pushing unit (124) is positioned at a level higher than said shaped guide (118) in such a way as to intercept a top portion of the upper expansion bay (115) of the drone (D), positioned above said recharging coupler (116).

8. The station (S) according to any one of the preceding claims, wherein said electrical connector (113) comprises at least two electrical contacts (114) connected or connectable to different poles of an electricity supply source, and wherein said two electrical contacts (114) are positioned consecutively along a direction perpendicular to the sliding direction of the landing/taking off surface (105) and in particular vertical.

9. The station (S) according to any one of the preceding claims, also comprising at least one between:
- a hardware and power supply module (200), connected or connectable to the landing/taking off module (100) and configured for housing hardware components suitable for the operation of the landing/taking off module (100) and/or for the electricity supply of the landing/taking off module (100); and
- a conditioning module (300), connected or connectable to the landing/taking off module (100) and configured for generating hot and/or cold air for controlling the temperature of the landing/taking off module (100) and/or of the drone (D) stored in the landing/taking off module (100), preferably, said hardware module (200) and/or said conditioning module (300) having an outer shape identical to the outer shape of the landing/taking off module (100).

10. A drone (D), configured for use with a station (S) according to any one of the preceding claims, wherein said drone (D) has a main body (117) equipped with lifting propellers and supporting feet (122) and at least one detection device, preferably a video camera, and wherein said main body (117) has an upper expansion bay (115) defining said recharging coupler (116).

11. The drone (D) according to claim 10, wherein the upper expansion bay (115) has a engaging portion (120) with an axisymmetric shape configured for a sliding support with said at least one sliding surface (121) of the shaped guide (118) and preferably made or coated with a low friction material, in particular Teflon.

12. The drone (D) according to claim 11, wherein said engaging portion (120) and said recharging coupler (116) are superposed on each other along a direction of extension of the upper expansion bay (115) away from the main body (117) of the drone (D), preferably the recharging coupler (116) being positioned above said engaging portion (120).

13. The drone (D) according to any one of claims 10 to 12, wherein said feet (122) of the drone (D) are made and/or coated with a low friction material, preferably Teflon.

14. The drone (D) according to any one of claims 10 to 13, wherein said upper expansion bay (115) is retrofit to the main body (117) of an existing drone (D).

15. An automatic detection device, comprising:
- a station (S) according to any one of claims 1 to 9;
- a drone (D) according to any one of claims 10 to 14 and configured to interact with said station (S);
- a control unit connected to the station (S) and to the drone (D) for guiding said drone (D) automatically in accordance with surveillance and landing and take-off operations relative to the station (S), and for actuating said station (S) to automatically perform operations for landing and take-off of the drone (D) relative to the station (S).

16. A method for inspecting a territory travelled by the railway sections and the railway lines, as well as the structures which operate along the lines, comprising the steps of:
- preparing a station (S) according to any one of claims 1 to 9 and a drone (D) according to any one of claims 10 to 14;
- guiding said drone (D) automatically in accordance with surveillance and landing and take-off operations relative to the station (S), and for actuating said station (S) to automatically perform operations for landing and take-off of the drone (D) relative to the station (S);
- electrically recharging said drone (D) during at least a storage step of the drone (D) inside the landing/taking off module (100) of said station (S).

## Patentansprüche

1. Station (S) zum Verstauen, Steuern und Befehligen einer Drohne (D), die dafür ausgebildet ist, Beobachtungsmissionen auf dem von Bahnlinienstrecken durchzogenen Gebiet und auch auf den Linien selbst sowie auf all den entlang der Linie arbeitenden Strukturen durchzuführen, wobei die Drohne (D) von dem Typ ist, der einen oberen Erweiterungsschacht (115) aufweist, der mit einem Aufladekoppler (116) ausgestattet ist, wobei die Station (S) mindestens ein Modul (100) umfasst, das zum Landen/Starten und Aufladen der Drohne (D) ausgebildet ist, wobei das erste Modul (100) Folgendes umfasst:
- einen Enthalterahmen (101), der im Inneren einen Stauraum (V) bildet, in dem die Drohne (D) in einer Stauauslegung positioniert ist;
- eine Lande-/Startfläche (105), die auf dem Enthalterahmen (101) montiert und gleitend zwischen mindestens einer ausgezogenen Auslegung, in der die Lande-/Startfläche (105) mindestens teilweise außerhalb des Stauraums (V) so positioniert ist, dass die Landung und/oder der Start der Drohne (D) möglich ist, und einer eingezogenen Auslegung beweglich ist, in der die Lande-/Startfläche (105) innerhalb des Stauraums (V) so positioniert ist, dass die Drohne (D) vollständig im Stauraum (V) positioniert ist;
wobei das erste Modul (100) Folgendes umfasst:
- eine geformte Führung (118), die auf dem Enthalterahmen (101) montiert und in dem Stauraum (V) und über der Lande-/Startfläche (105) positioniert ist, um einen Eingriffsabschnitt zu bilden, der für einen Gleitkontakt mit dem oberen Erweiterungsschacht (115) der Drohne (D) geeignet ist, wobei die geformte Führung (118) mindestens eine Gleitfläche (121) definiert, die zu einer Aufladezone gerichtet ist und/oder zu ihr konvergiert;
- ein Aufladesystem (112), das in der Aufladezone positioniert ist und mindestens einen elektrischen Verbinder (113) umfasst, der auf der geformten Führung (118) positioniert ist;
- Schiebemittel (119), die entlang der Gleitrichtung der Lande-/Startfläche (105) beweglich und ausgelegt sind, um die Drohne (D) derart zu schieben, dass der Aufladekoppler (116) der Drohne (D) entlang der geformten Führung (118) gleitet und den mindestens einen Verbinder (113) in der Aufladezone erreicht.

2. Station (S) nach Anspruch 1, wobei die geformte Führung (118) zwei Gleitflächen (121) aufweist, die einander zugewandt sind und in Richtung der Aufladezone konvergieren.

3. Station (S) nach Anspruch 2, wobei die Gleitflächen (121) gekrümmt, vorzugsweise konvex sind, um eine Spitze zu definieren, in der die Aufladezone positioniert ist, und noch bevorzugter die Form eines Kreisbogens aufweisen.

4. Station (S) nach einem der vorhergehenden Ansprüche, wobei die geformte Führung (118) stationär an dem Enthalterahmen (101) montiert ist.

5. Station (S) nach einem der vorhergehenden Ansprüche, wobei die Schiebemittel (119) einen Schlitten (123), der entlang der Gleitrichtung der Lande-/Startfläche (105) beweglich ist, und eine Schiebeeinheit (124) umfassen, die auf dem beweglichen Schlitten (123) montiert und ausgelegt ist, um eine Betriebsposition, in der während des Vorschiebens des beweglichen Schlittens (123) in Richtung der eingezogenen Position die Schiebeeinheit einen Abschnitt der Drohne (D) abfängt und ihn schiebt, und eine ausgerückte Position einzunehmen, in der die Schiebeeinheit (124) so positioniert ist, dass sie keinen Abschnitt der Drohne (D) abfängt.

6. Station (S) nach Anspruch 5, wobei die Schiebeeinheit (124) drehbar auf dem Schlitten (123) montiert ist, um sich um eine horizontale Kippachse zwischen der Betriebs- und der ausgerückten Position zu drehen; wobei vorzugsweise die Drehung der Schiebeeinheit (124) um die Kippachse von der ausgerückten Position in die Betriebsposition durch Schwerkraft während eines Gleitens des Schlittens (123) in Richtung der Aufladezone betätigt wird und die Drehung der Schiebeeinheit (124) von der Betriebsposition in die ausgerückte Position durch Interferenz mit einem festen Kontakt (125) während eines Gleitens des Schlittens (123) wegführend von der Aufladezone betätigt wird.

7. Station (S) nach Anspruch 5 oder 6, wobei die Schiebeeinheit (124) auf einem höheren Niveau als die geformte Führung (118) positioniert ist, um einen oberseitigen Abschnitt des oberen Erweiterungsschachts (115) der Drohne (D) abzufangen, der über dem Aufladekoppler (116) positioniert ist.

8. Station (S) nach einem der vorhergehenden Ansprüche, wobei der elektrische Verbinder (113) mindestens zwei elektrische Kontakte (114) umfasst, die mit verschiedenen Polen einer Stromversorgungsquelle verbunden oder verbindbar sind, und wobei die zwei elektrischen Kontakte (114) aufeinanderfolgend entlang einer Richtung senkrecht zur Gleitrichtung der Lande-/Startfläche (105) und insbesondere vertikal positioniert sind.

9. Station (S) nach einem der vorhergehenden Ansprüche, die außerdem mindestens eine zwischen Folgendem umfasst:
- ein Hardware- und Stromversorgungsmodul (200), das mit dem Lande-/Startmodul (100) verbunden oder verbindbar ist und zur Unterbringung von Hardwarekomponenten ausgelegt ist, die für den Betrieb des Lande-/Startmoduls (100) und/oder für die Stromversorgung des Lande-/Startmoduls (100) geeignet sind; und
- ein Konditionierungsmodul (300), das mit dem Lande-/Startmodul (100) verbunden oder verbindbar ist und zum Erzeugen von heißer und/oder kalter Luft zum Steuern der Temperatur des Lande-/Startmoduls (100) und/oder der in dem Lande-/Startmodul (100) verstauten Drohne (D) ausgelegt ist, wobei das Hardwaremodul (200) und/oder das Konditionierungsmodul (300) vorzugsweise eine Außenform aufweisen, die mit der Außenform des Lande-/Startmoduls (100) identisch ist.

10. Drohne (D), die zur Verwendung mit einer Station (S) nach einem der vorhergehenden Ansprüche ausgelegt ist, wobei die Drohne (D) einen Hauptkörper (117), der mit Hubpropellern und Stützfüßen (122) ausgestattet ist, und mindestens eine Detektionsvorrichtung, vorzugsweise eine Videokamera, aufweist, und wobei der Hauptkörper (117) einen oberen Erweiterungsschacht (115) aufweist, der den Aufladekoppler (116) definiert.

11. Drohne (D) nach Anspruch 10, wobei der obere Erweiterungsschacht (115) einen Eingriffsabschnitt (120) mit einer achsensymmetrischen Form aufweist, der für eine Gleitlagerung mit der zumindest einen Gleitfläche (121) der geformten Führung (118) ausgelegt ist und vorzugsweise aus einem reibungsarmen Material, insbesondere Teflon, hergestellt oder damit beschichtet ist.

12. Drohne (D) nach Anspruch 11, wobei der Eingriffsabschnitt (120) und der Aufladekoppler (116) entlang einer Ausdehnungsrichtung des oberen Erweiterungsschachts (115) wegführend von dem Hauptkörper (117) der Drohne (D) übereinander angeordnet sind, wobei vorzugsweise der Aufladekoppler (116) über dem Eingriffsabschnitt (120) positioniert ist.

13. Drohne (D) nach einem der Ansprüche 10 bis 12, wobei die Füße (122) der Drohne (D) aus einem reibungsarmen Material, vorzugsweise Teflon, hergestellt und/oder damit beschichtet sind.

14. Drohne (D) nach einem der Ansprüche 10 bis 13, wobei der obere Erweiterungsschacht (115) an dem Hauptkörper (117) einer existierenden Drohne (D) nachgerüstet ist.

15. Automatische Detektionsvorrichtung, umfassend:
- eine Station (S) nach einem der Ansprüche 1 bis 9;
- eine Drohne (D) nach einem der Ansprüche 10 bis 14, die dazu ausgelegt ist, mit der Station (S) zu interagieren;
- eine Steuereinheit, die mit der Station (S) und mit der Drohne (D) verbunden ist, um die Drohne (D) automatisch gemäß Überwachungs- und Lande- und Startvorgänge relativ zu der Station (S) zu führen und um die Station (S) zu betätigen, damit Vorgänge zum Landen und Starten der Drohne (D) relativ zu der Station (S) automatisch durchgeführt werden.

16. Verfahren zum Inspizieren eines von den Bahnsektionen und den Bahnlinien durchzogenen Gebiets sowie der entlang der Linien arbeitenden Strukturen, umfassend die folgenden Schritte:
- Vorbereiten einer Station (S) nach einem der Ansprüche 1 bis 9 und einer Drohne (D) nach einem der Ansprüche 10 bis 14;
- Führen der Drohne (D) automatisch gemäß Überwachungs- und Lande- und Startvorgänge relativ zu der Station (S) und zum Betätigen der Station (S), um automatisch Vorgänge zum Landen und Starten der Drohne (D) relativ zu der Station (S) durchzuführen;
- elektrisches Aufladen der Drohne (D) während mindestens eines Schritts zum Verstauen der Drohne (D) innerhalb des Lande-/Startmoduls (100) der Station (S).

## Revendications

1. Station (S) pour stocker, contrôler et commander un drone (D) conçu pour effectuer des missions d'observation sur le territoire parcouru par des tronçons de lignes ferroviaires, mais aussi sur les lignes elles-mêmes, ainsi que sur toutes les structures qui fonctionnent le long de la ligne, ledit drone (D) étant du type à baie d'expansion supérieure (115) équipée d'un coupleur de recharge (116), ladite station (S) comprenant au moins un module (100) conçu pour l'atterrissage/le décollage et la recharge dudit drone (D), dans laquelle ledit premier module (100) comprend :
- un cadre de contenance (101) formant à l'intérieur un espace de stockage (V) dans lequel positionner ledit drone (D) dans une configuration de stockage ;
- une surface d'atterrissage/de décollage (105) montée sur le cadre de contenance (101) et mobile de manière coulissante entre au moins une configuration extraite, dans laquelle ladite surface d'atterrissage/de décollage (105) est positionnée au moins en partie à l'extérieur dudit espace de stockage (V) de manière à permettre l'atterrissage et/ou le décollage dudit drone (D), et une configuration rétractée, dans laquelle ladite surface d'atterrissage/de décollage (105) est positionnée à l'intérieur dudit espace de stockage (V) de manière à positionner ledit drone (D) entièrement dans l'espace de stockage (V) ;
dans laquelle ledit premier module (100) comprend :
- un guide façonné (118), monté sur le cadre de contenance (101), positionné dans l'espace de stockage (V) et au-dessus de ladite surface d'atterrissage/de décollage (105) pour former une partie de mise en prise adaptée pour entrer en contact par coulissement avec ladite baie d'expansion supérieure (115) du drone (D), ledit guide façonné (118) définissant au moins une surface de coulissement (121) orientée et/ou convergeant vers une zone de recharge ;
- un système de recharge (112) positionné dans ladite zone de recharge et comprenant au moins un connecteur électrique (113) positionné sur ledit guide façonné (118) ;
- des moyens de poussée (119), mobiles le long de la direction de coulissement de la surface d'atterrissage/de décollage (105) et configurés pour pousser le drone (D) de manière à ce que le coupleur de recharge (116) du drone (D) coulisse le long dudit guide façonné (118) en atteignant ledit au moins un connecteur (113) dans la zone de recharge.

2. Station (S) selon la revendication 1, dans laquelle ledit guide façonné (118) comporte deux surfaces de coulissement (121) se faisant face et convergeant vers ladite zone de recharge.

3. Station (S) selon la revendication 2, dans laquelle lesdites surfaces de coulissement (121) sont incurvées, de préférence convexes pour définir une cuspide dans laquelle ladite zone de recharge est positionnée et encore plus préférablement ayant la forme d'un arc de cercle.

4. Station (S) selon l'une quelconque des revendications précédentes, dans laquelle ledit guide façonné (118) est monté de façon fixe sur le cadre de contenance (101).

5. Station (S) selon l'une quelconque des revendications précédentes, dans laquelle lesdits moyens de poussée (119) comprennent un chariot (123) mobile le long de la direction de coulissement de la surface d'atterrissage/de décollage (105) et une unité de poussée (124) montée sur le chariot (123) mobile et configurée pour adopter une position de fonctionnement, dans laquelle, pendant l'alimentation du chariot (123) mobile vers la position rétractée, l'unité de poussée intercepte et pousse une partie dudit drone (D) ; et une position désengagée dans laquelle l'unité de poussée (124) est positionnée de manière à n'intercepter aucune partie dudit drone (D).

6. Station (S) selon la revendication 5, dans laquelle l'unité de poussée (124) est montée de façon rotative sur le chariot (123) pour tourner autour d'un axe de basculement horizontal entre lesdites positions de fonctionnement et désengagée ; de préférence, la rotation de l'unité de poussée (124) autour de l'axe de basculement de la position désengagée à la position de fonctionnement est actionnée par gravité pendant un coulissement du chariot (123) vers la zone de recharge et la rotation de l'unité de poussée (124) de la position de fonctionnement à la position désengagée étant actionnée par l'interférence avec un contact fixe (125) pendant un coulissement du chariot (123) éloigné de la zone de recharge.

7. Station (S) selon la revendication 5 ou 6, dans laquelle ladite unité de poussée (124) est positionnée à un niveau plus élevé que ledit guide façonné (118) de manière à intercepter une partie supérieure de la baie d'expansion supérieure (115) du drone (D), positionnée au-dessus dudit coupleur de recharge (116).

8. Station (S) selon l'une quelconque des revendications précédentes, dans laquelle ledit connecteur électrique (113) comprend au moins deux contacts électriques (114) connectés ou pouvant être connectés à des pôles différents d'une source d'alimentation électrique, et dans laquelle lesdits deux contacts électriques (114) sont positionnés consécutivement le long d'une direction perpendiculaire à la direction de coulissement de la surface d'atterrissage/de décollage (105) et, en particulier, verticale.

9. Station (S) selon l'une quelconque des revendications précédentes, comprenant de plus au moins un module parmi :
- un module de matériel et d'alimentation électrique (200), connecté ou pouvant être connecté au module d'atterrissage/de décollage (100) et configuré pour loger des composants matériels adaptés au fonctionnement du module d'atterrissage/de décollage (100) et/ou à l'alimentation électrique du module d'atterrissage/de décollage (100) ; et
- un module de conditionnement (300), connecté ou pouvant être connecté au module d'atterrissage/de décollage (100) et configuré pour générer de l'air chaud et/ou froid afin de contrôler la température du module d'atterrissage/de décollage (100) et/ou du drone (D) stocké dans le module d'atterrissage/de décollage (100), de préférence, ledit module matériel (200) et/ou ledit module de conditionnement (300) ayant une forme extérieure identique à la forme extérieure du module d'atterrissage/de décollage (100).

10. Drone (D), configuré pour être utilisé avec une station (S) selon l'une quelconque des revendications précédentes, dans lequel ledit drone (D) comporte un corps principal (117) équipé d'hélices de levage et de pieds de support (122) et au moins un dispositif de détection, de préférence une caméra vidéo, et dans lequel ledit corps principal (117) comporte une baie d'expansion supérieure (115) définissant ledit coupleur de recharge (116).

11. Drone (D) selon la revendication 10, dans lequel la baie d'expansion supérieure (115) comporte une partie de mise en prise (120) ayant une forme axisymétrique configurée pour un support de coulissement avec ladite au moins une surface de coulissement (121) du guide façonné (118) et de préférence constituée ou revêtue d'un matériau à faible friction, en particulier du Téflon.

12. Drone (D) selon la revendication 11, dans lequel ladite partie de mise en prise (120) et ledit coupleur de recharge (116) sont superposés l'un sur l'autre le long d'une direction d'extension de la baie d'expansion supérieure (115) éloignés du corps principal (117) du drone (D), de préférence le coupleur de recharge (116) étant positionné au-dessus de ladite partie de mise en prise (120).

13. Drone (D) selon l'une quelconque des revendications 10 à 12, dans lequel lesdits pieds (122) du drone (D) sont constitués et/ou revêtus d'un matériau à faible friction, de préférence du Téflon.

14. Drone (D) selon l'une quelconque des revendications 10 à 13, dans lequel ladite baie d'expansion supérieure (115) est montée en rattrapage sur le corps principal (117) d'un drone (D) existant.

15. Dispositif de détection automatique, comprenant :
- une station (S) selon l'une quelconque des revendications 1 à 9 ;
- un drone (D) selon l'une quelconque des revendications 10 à 14 et configuré pour interagir avec ladite station (S) ;
- une unité de contrôle reliée à la station (S) et au drone (D) pour guider automatiquement ledit drone (D) conformément aux opérations de surveillance et d'atterrissage et de décollage relatives à la station (S), et pour actionner ladite station (S) afin d'effectuer automatiquement les opérations d'atterrissage et de décollage du drone (D) relatives à la station (S).

16. Procédé d'inspection d'un territoire parcouru par les tronçons ferroviaires et les lignes ferroviaires, ainsi que les structures qui fonctionnent le long des lignes, comprenant les étapes de :
- préparer une station (S) selon l'une quelconque des revendications 1 à 9 et un drone (D) selon l'une quelconque des revendications 10 à 14 ;
- guider automatiquement ledit drone (D) conformément aux opérations de surveillance et d'atterrissage et de décollage relatives à la station (S), et pour actionner ladite station (S) afin d'effectuer automatiquement les opérations d'atterrissage et de décollage du drone (D) relatives à la station (S) ;
- recharger électriquement ledit drone (D) pendant au moins une étape de stockage du drone (D) à l'intérieur du module d'atterrissage/décollage (100) de ladite station (S).
